# EUROPEAN PATENT APPLICATION

(11) **EP 4 468 728 A1**
(43) Date of publication of application: **27.11.2024**
(21) Application number: 24173715.4
(22) Date of filing: 02.05.2024
(51) Int. Cl.: H04N 23/71, G06V 10/141, H04N 23/56, H04N 23/74

(54) **ELECTRONIC DEVICE WITH SUPPLEMENTAL EMITTERS FOR TRACKING EXTERNAL OBJECTS**

(30) Priority: 25.05.2023 US 202363504345 P; 10.03.2024 US 202418600730
(71) Applicant: Apple Inc., Cupertino, CA 95014 (US)
(72) Inventor: DING, Hengzhou, Cupertino, 95014 (US); SEYVE, Christophe, Cupertino, 95014 (US)
(74) Representative: Zacco Denmark A/S

(57) **Abstract**

A head-mounted device may include one or more scene cameras configured to capture images of a scene, one or more hands sensors configured to detect a user's hands, one or more supplemental emitters configured to provide supplemental illumination for the user's hands, and control circuitry configured to determine whether the user's hands are sufficiently illuminated, to determine whether the captured images are properly exposed, and to adjust the one or more supplemental emitters based on whether the user's hands are sufficiently illuminated and based on whether the captured images are properly exposed. The control circuitry can activate the supplemental emitters when the captured images are too dark or when one of the detected hands is too dark. The control circuitry can deactivate the supplemental emitters when one of the detected hands is too bright or when the captured images are overly exposed.

## Description

### Field

This relates generally to electronic devices, and, more particularly, to electronic devices such as head-mounted devices.

### Background

Electronic devices such as head-mounted devices may have sensors. For example, a head-mounted device may have a camera for capturing images of the environment surrounding the head-mounted device. The head-mounted device can also include sensors for tracking a user's hands.

It can be challenging to design sensors for detecting a user's hands. Detection of the user's hands can become even more difficult in low light conditions. It is within such context that the embodiments herein arise.

### Summary

A head-mounted device may be worn on a user's head. The head-mounted device may be operated in a real-world environment containing lighting from one or more light sources. The head-mounted device may include one or more sensors for capturing images from the real-world environment and for tracking external objects and/or a user's body part(s).

An aspect of the disclosure provides a method of operating an electronic device that includes capturing an image of a scene using one or more image sensors, detecting an external object using one or more external object sensors, determining whether the external object is sufficiently illuminated based on information obtained from the one or more external object sensors, and activating one or more supplemental emitters to illuminate the external object in response to determining that the external object is not sufficiently illuminated. The one or more supplemental emitters can be deactivated in response to determining that the external object is sufficiently illuminated. The method can further include activating the one or more supplemental emitters to illuminate the scene and the external object in response to determining that the captured image of the scene is not sufficiently bright. The method can include computing a scene average for the captured image of the scene and comparing the computed scene average to a low light scene target. The method can include computing a first average (e.g., dark hand average) associated with a first external object, computing a second average (e.g., bright hand average) associated with a second external object, and comparing the first average to an external object target.

The method can further include determining whether an external object is currently detected by the one or more external object sensors and ramping up an output strength of the one or more supplemental emitters to converge the scene average towards the low light scene target in response to determining that no external object is currently detected by the one or more external object sensors. The method can include computing an external object average based on the first average and the second average. The method can include adjusting the output strength of the one or more supplemental emitters to converge the first average to the external object target, adjusting the output strength of the one or more supplemental emitters to converge the scene average to the low light scene target, and adjusting the output strength of the one or more supplemental emitters to limit the second average to an external object clipping limit. The method can include deactivating the one or more supplemental emitters in response to determining that the second average is above the external object clipping limit when the output strength of the one or more supplemental emitters is at a minimum level or in response to determining that the scene average is above the scene clipping limit when the output strength of the one or more supplemental emitters is at the minimum level.

An aspect of the disclosure provides a method of operating a head-mounted device having one or more image sensors and a hands tracker. The method can include capturing an image of a scene using the one or more image sensors, detecting a hand using the hands tracker, activating one or more supplemental emitters to illuminate the hand, detecting a motion of the hand, and adjusting (decreasing) an output strength of the one or more supplemental emitters based on the detected motion of the hand. The method can include computing an average brightness value for the detected hand and decreasing the output strength of the one or more supplemental emitters in response to determining that the computed average brightness value is increasing at a rate greater than a threshold level. The method can include periodically deactivating the one or more supplemental emitters and determining whether a scene average of the captured image is less than a low light scene target and determining whether a hand average of the detected hand is less than a dark hand target while the one or more supplemental emitters are deactivated.

An aspect of the disclosure provides a head-mounted device that includes support structures configured to mount the head-mounted device on a user's head, one or more scene cameras configured to capture images of a scene, one or more hands cameras configured to detect a user's hands, one or more supplemental emitters configured to provide supplemental illumination for the user's hands, and control circuitry configured to determine whether the user's hands are sufficiently illuminated, determine whether the captured images are properly exposed, and adjust the one or more supplemental emitters based on whether the user's hands are sufficiently illuminated and based on whether the captured images are properly exposed. The control circuitry can be configured to determine whether the user's hands are sufficiently illuminated by obtaining a dark hand average associated with a darker one of the user's hands, obtaining a bright hand average associated with a brighter one of the user's hands, and comparing the dark hand average to a predetermined dark hand target. The control circuitry can be configured to determine whether the captured images are properly exposed by obtaining a scene average of the captured images and comparing the scene average to a predetermined low light scene target.

### Brief Description of the Drawings

FIG. 1 is a side view of an illustrative electronic device such as a head-mounted device in accordance with some embodiments.
FIG. 2 is schematic diagram of an illustrative system with an electronic device in accordance with some embodiments.
FIG. 3 is side view of an illustrative electronic device with multiple cameras having different fields of view in accordance with some embodiments.
FIG. 4 is a top view of an illustrative electronic device with multiple cameras having different fields of view in accordance with some embodiments.
FIG. 5 is a block diagram of an illustrative electronic device having scene cameras, hands cameras, and supplemental emitters for hands tracking in accordance with some embodiments.
FIGS. 6-8 are flow charts of illustrative steps for operating an electronic device of the type shown in FIGS. 1-5 in accordance with some embodiments.

### Detailed Description

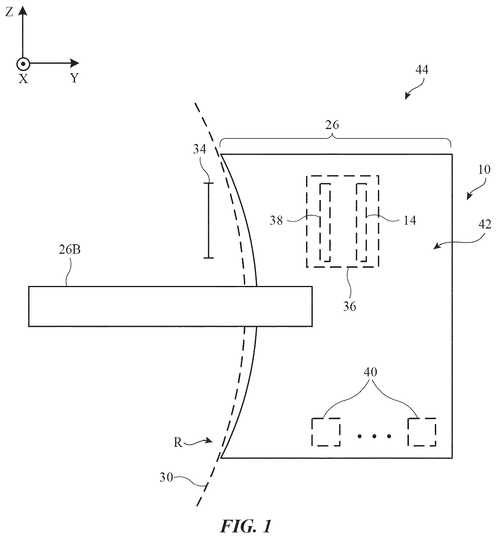

FIG. 1 is a side view of an illustrative head-mounted electronic device of the type that may be provided with sensor circuitry for tracking one or more body parts of a user. As shown in FIG. 1, head-mounted device 10 may include head-mounted support structure 26. Support structure 26 may have walls or other structures that separate an interior region of device 10 such as interior region 42 from an exterior region surrounding device 10 such as exterior region 44. Electrical components 40 (e.g., integrated circuits, sensors, control circuitry, light-emitting diodes, lasers, and other light-emitting devices, other control circuits and input-output devices, etc.) may be mounted on printed circuits and/or other structures within device 10 (e.g., in interior region 42).

To present a user with images for viewing from eye boxes such as eye box 34, device 10 may include one or more display(s) such as display 14 and lenses such as lens 38. These components may be mounted in optical modules such as optical module 36 (e.g., a lens barrel) to form respective left and right optical systems. There may be, for example, a left display 14 for presenting an image through a left lens to a user's left eye in a left eye box and a right display 14 for presenting an image to a user's right eye in a right eye box. The user's eyes are located in eye boxes 34 at rear side R of device 10 when structure 26 rests against the outer surface (face surface 30) of the user's face.

Support structure 26 may include a main support structure such as main housing portion 26M (sometimes referred to as a main portion). Main housing portion 26M may form front side F of device 10. On rear side R, main housing portion 26M may have cushioned structures to enhance user comfort as portion 26M rests against face surface 30. If desired, support structure 26 may include optional head straps such as strap 26B and/or other structures that allow device 10 to be worn on a head of a user.

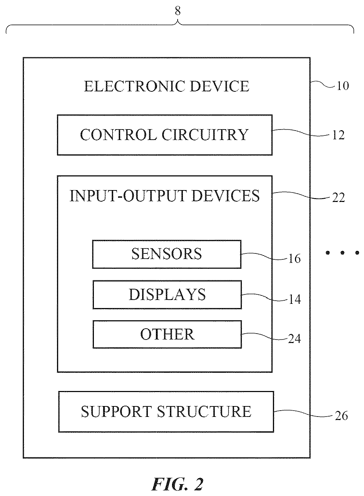

A schematic diagram of an illustrative system that may include a head-mounted device is shown in FIG. 2. As shown in FIG. 2, system 8 may have one or more electronic devices 10. Devices 10 may include a head-mounted device (e.g., device 10 of FIG. 1), accessories such as headphones and wrist watches, computing equipment (e.g., a cellular telephone, tablet computer, laptop computer, desktop computer, and/or remote computing equipment that supplies content to a head-mounted device), smart home devices, and/or other devices that communicate with each other.

Each electronic device 10 may have control circuitry 12. Control circuitry 12 may include storage and processing circuitry for controlling the operation of device 10. Control circuitry 12 may include storage such as hard disk drive storage, nonvolatile memory (e.g., electrically-programmable-read-only memory configured to form a solid-state drive), volatile memory (e.g., static or dynamic random-access-memory), etc. Processing circuitry in control circuitry 12 may be based on one or more microprocessors, microcontrollers, digital signal processors, baseband processors, power management units, audio chips, graphics processing units, application specific integrated circuits, and other integrated circuits. Software code may be stored on storage in circuitry 12 and run on processing circuitry in circuitry 12 to implement control operations for device 10 (e.g., data gathering operations, operations involving the adjustment of the components of device 10 using control signals, etc.). Control circuitry 12 may include wired and wireless communications circuitry. For example, control circuitry 12 may include radio-frequency transceiver circuitry such as cellular telephone transceiver circuitry, wireless local area network transceiver circuitry (e.g., WiFi^{®} circuitry), millimeter wave transceiver circuitry, and/or other wireless communications circuitry.

During operation, the communications circuitry of the devices in system 8 (e.g., the communications circuitry of control circuitry 12 of device 10) may be used to support communication between the electronic devices. For example, one electronic device may transmit video data, audio data, and/or other data to another electronic device in system 8. Electronic devices in system 8 may use wired and/or wireless communications circuitry to communicate through one or more communications networks (e.g., the internet, local area networks, etc.). The communications circuitry may be used to allow data to be received by device 10 from external equipment (e.g., a tethered computer, a portable device such as a handheld device or laptop computer, online computing equipment such as a remote server or other remote computing equipment, or other electrical equipment) and/or to provide data to external equipment.

Each device 10 in system 8 may include input-output devices 22. Input-output devices 22 may be used to allow a user to provide device 10 with user input. Input-output devices 22 may also be used to gather information on the environment in which device 10 is operating. Output components in devices 22 may allow device 10 to provide a user with output and may be used to communicate with external electrical equipment.

As shown in FIG. 2, input-output devices 22 may include one or more displays such as displays 14. In some configurations, device 10 includes left and right display devices. Device 10 may, for example, include left and right components such as left and right scanning mirror display devices or other image projectors, liquid-crystal-on-silicon display devices, digital mirror devices, or other reflective display devices, left and right display panels based on light-emitting diode pixel arrays (e.g., organic light-emitting displays with polymer or semiconductor substrates or display devices based on pixel arrays formed from crystalline semiconductor light-emitting diode dies), liquid crystal display panels, and/or or other left and right display devices that provide images to left and right eye boxes for viewing by the user's left and right eyes, respectively.

During operation, displays 14 may be used to display visual content for a user of device 10. The content that is presented on displays 14 may include virtual objects and other content that is provided to displays 14 by control circuitry 12. This virtual content may sometimes be referred to as computer-generated content. Computer-generated content may be displayed in the absence of real-world content or may be combined with real-world content. In some configurations, a real-world image may be captured by a camera (e.g., a forward-facing camera, sometimes referred to as a front-facing camera) so that computer-generated content may be electronically overlaid on portions of the real-world image (e.g., when device 10 is a pair of virtual reality goggles).

Input-output circuitry 22 may include sensors 16. Sensors 16 may include, for example, three-dimensional sensors (e.g., three-dimensional image sensors such as structured light sensors that emit beams of light and that use two-dimensional digital image sensors to gather image data for three-dimensional images from light spots that are produced when a target is illuminated by the beams of light, binocular three-dimensional image sensors that gather three-dimensional images using two or more cameras in a binocular imaging arrangement, three-dimensional lidar (light detection and ranging) sensors, three-dimensional radio-frequency sensors, or other sensors that gather three-dimensional image data), cameras (e.g., infrared and/or visible digital image sensors), gaze tracking sensors (e.g., a gaze tracking system based on an image sensor and, if desired, a light source that emits one or more beams of light that are tracked using the image sensor after reflecting from a user's eyes), touch sensors, capacitive proximity sensors, light-based (optical) proximity sensors, other proximity sensors, force sensors (e.g., strain gauges, capacitive force sensors, resistive force sensors, etc.), sensors such as contact sensors based on switches, gas sensors, pressure sensors, moisture sensors, magnetic sensors, audio sensors (microphones), ambient light sensors, microphones for gathering voice commands and other audio input, sensors that are configured to gather information on motion, position, and/or orientation (e.g., accelerometers, gyroscopes, compasses, and/or inertial measurement units that include all of these sensors or a subset of one or two of these sensors), and/or other sensors. The location of each sensor within device 10 relative to display(s) 14 is known.

User input and other information may be gathered using sensors and other input devices in input-output devices 22. If desired, input-output devices 22 may include other devices 24 such as haptic output devices (e.g., vibrating components), light-emitting diodes, lasers, and other light sources, speakers such as ear speakers for producing audio output, circuits for receiving wireless power, circuits for transmitting power wirelessly to other devices, batteries and other energy storage devices (e.g., capacitors), joysticks, buttons, and/or other components.

Electronic device 10 may have head-mounted support structures such as head-mounted support structure 26 (e.g., head-mounted housing structures such as housing walls, straps, etc.). The head-mounted support structure may be configured to be worn on a head of a user (e.g., against the user's face covering the user's eyes) during operation of device 10 and may support displays 14, sensors 16, other components 24, other input-output devices 22, and control circuitry 12 (see, e.g., components 40 and optical module 36 of FIG. 1).

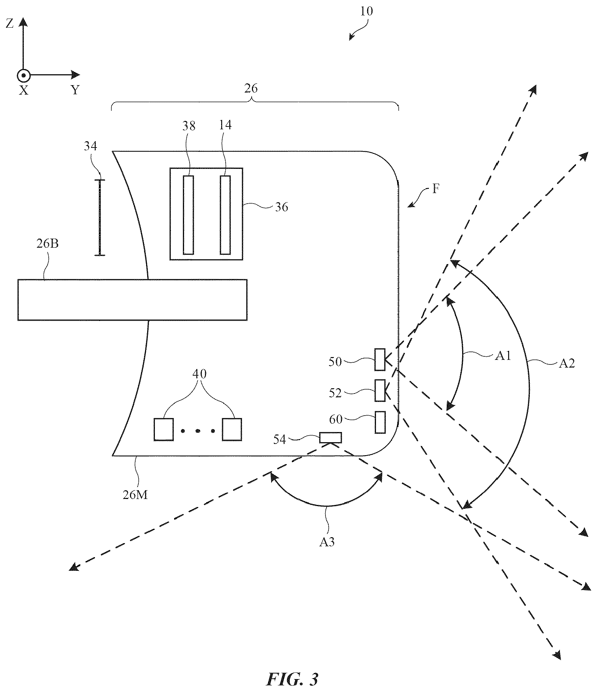

FIG. 3 is a cross-sectional side view of a head-mounted device 10 in an illustrative configuration in which the device includes different types of sensors for monitoring the environment surrounding device 10. Head-mounted device 10 of FIG. 3 may have optical sensors. These sensors may include cameras. The cameras of device 10 may have lenses and image sensors that are configured to capture images at ultraviolet light wavelengths, visible light wavelengths, and/or infrared wavelengths.

As shown in FIG. 3, the right-hand side of device 10 may contain a first camera such as camera 50 that is used for capturing images of a user's environment that are displayed on displays 14 in real time (e.g., to capture real-time pass-through video). The left-hand side of device 10 may have a corresponding camera 50 that is oriented in the same way. The angles of view of cameras 50 on the left and right sides may be configured to overlap in front of device 10, so that there are no gaps in coverage in front of the user. If desired, cameras 50 on the left and right sides of device 10 may be replaced by a single camera or any number of cameras. Camera(s) 50 that are used in capturing real-time video that is displayed as pass-through video to the user are sometimes referred to as scene cameras or pass-through cameras. The pass-through video that is acquired using camera(s) 50 and presented to the user is sometimes referred to as a pass-through video feed or pass-through feed.

Device 10 may also include other cameras that can be used in tracking the positions and movements of external objects. As an example, tracking cameras may track a user's hand or the user's torso or other body part(s). Hand gesture input may, as an example, be used in controlling operation of device 10. Body part monitoring may be used to allow a user's body motions to be replicated by content displayed in a virtual environment. If desired, device 10 may also include cameras that are used in tracking the position of external accessories (e.g., the position and movement of controllers that are moved by a user to control device 10). In some scenario, visual inertial odometry (VIO) systems or other systems that determine the position, movement, and/or orientation of device 10 relative to the environment surrounded by device 10 may be formed by combining data from one or more cameras in device 10 with additional sensor data (e.g., data from an inertial measurement unit). Cameras may perform dedicated functions (tracking, visual inertial odometry functions, scene capture, ranging, three-dimensional image capture for facial recognition and environment mapping, etc.) or two or more of these operations may be performed by a shared camera.

Still referring to FIG. 3, the right-hand side of device 10 may also contain a second camera 52 and a third camera 54. Camera 52 may be a forward-facing (front-facing) camera having a wider field of view than pass-through camera 50. For instance, pass-through camera 50 may have a first field of view defined by an angle A1 in the YZ plane, whereas camera 52 may have a second field of view defined by an angle A2 in the YZ plane that is greater than angle A1. Camera 54 may be a downward-facing camera also have a relatively wide field of view. For instance, camera 54 may have a third field of view defined by an angle A3 in the YZ plane that is also greater than angle A1. The left-hand side of device 10 may have corresponding cameras 52 and 54 that are oriented in the same way. The angles of view of cameras 52 on the left and right sides may be configured to overlap in front of device 10, so that there are no gaps in coverage in front of the user. The angles of view of cameras 54 on the left and right sides may be configured to overlap below device 10, so that there are no gaps in coverage below device 10 where the user's hand and torso might be located when operating device 10. If desired, cameras 52 and 54 on the left and right sides of device 10 may be replaced by a single camera or any number of cameras.

Cameras 52 and 54 can be used in tracking the positions and movements of external objects (e.g., to track a user's hand, torso, or other body part, or to track external accessories) and can therefore sometimes be referred to as external object tracking cameras or object tracking sensors. Cameras 52 and 54 can be used in conjunction with additional inertial measurement units (e.g., accelerometers, gyroscopes, gyrocompasses, magnetometers, etc.) as part of a visual inertial odometry (VIO) system for determining the position, movement, and/or orientation of device 10 relative to the surrounding environment and can therefore sometimes be referred to as orientation tracking cameras, orientation sensors, or motion sensors.

The external object tracking sensors such as (e.g., cameras 52 and/or 54) can track external objects in normal to bright lighting conditions. In low light conditions, however, the accuracy and performance of such external object tracking sensors can degrade. In accordance with some embodiments, device 10 is provided with supplemental emitters such as one or more supplemental emitters 60 configured to emit supplemental light for illuminating the external objects to be tracked. Supplemental emitters 60 may emit signals at frequencies outside of the visible spectrum, such that the pass-through video captured from scene cameras and displayed to the user is not substantially altered, yet within the detection capabilities of the object tracking sensors. Supplemental emitter 60 can be an infrared (IR) emitter component configured to emit infrared light (e.g., light having wavelengths in the range of 700 nanometers to around 1000 nanometers). In such arrangements where supplemental emitters 60 are implemented as IR emitter devices, the external object tracking sensors can also be configured to detect infrared light.

This example in which supplemental emitter 60 is configured to output infrared light is illustrative. In other embodiments, supplemental emitter 60 might be configured to emit ultraviolet light or other non-visible light. The left-hand side of device 10 may have a corresponding emitter 60 that is oriented in the same way. The output coverage of emitters 60 on the left and right sides may be configured to overlap in front of device 10, so that there are no gaps in coverage in front of the user (e.g., the coverage of supplemental emitters 60 on the left and right sides may be configured to overlap in front and below device 10, so that there are no gaps in coverage below device 10 where the user's hands and torso might be located when operating device 10). If desired, emitters 60 on the left and right sides of device 10 may be replaced by a single emitter component or any number of emitters.

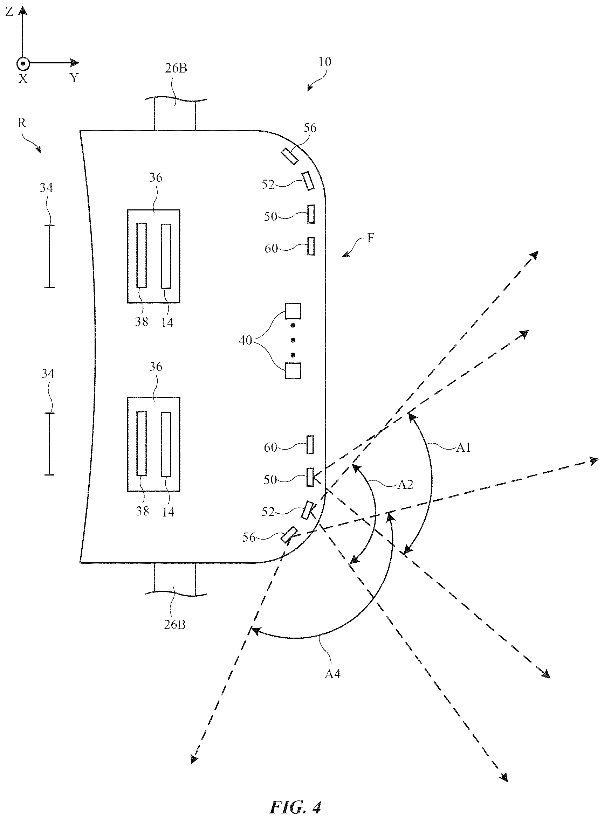

FIG. 4 is a top view of illustrative electronic device 10 showing left and right sides of the device. As shown FIG. 4, the right-hand side of device 10 may contain a pass-through (scene) camera 50, whereas the left-hand side of device 10 may contain another pass-through (scene) camera 50. Both pass-through cameras 50 on the left and right sides of device 10 are front-facing cameras having the same or similar orientations. The angles of view of cameras 50 on the left and right sides (see, e.g., field of view marked by angle A1) may be configured to overlap in front of device 10, so that there are no gaps in coverage in front of the user. If desired, cameras 50 on the left and right sides of device 10 may be replaced by a single camera or any number of outward-facing cameras.

The right-hand side of device 10 may include an object/orientation tracking camera 52, whereas the left-hand side of device 10 may include another object/orientation tracking camera 52. Both tracking cameras 52 on the left and right sides of device 10 are front-facing cameras having the same or similar orientations. The angles of view of cameras 52 on the left and right sides (see, e.g., field of view marked by angle A2) may be configured to overlap in front of device 10, so that there are no gaps in coverage in front of the user. If desired, cameras 52 on the left and right sides of device 10 may be replaced by a single camera or any number of outward-facing cameras.

In additional to cameras 50, 52, and 54 (not shown in FIG. 4 to avoid complicating the drawing), device 10 may also include sideways-facing cameras 56. Sideways-facing cameras 56 can be used in tracking the positions and movements of external objects (e.g., to track a user's hand, torso, or other body part, or to track external accessories) and can therefore sometimes be referred to as external object tracking cameras or object tracking sensors. Sideways-facing cameras 56 can also be used in conjunction with additional inertial measurement units (e.g., accelerometers, gyroscopes, etc.) as part of a visual inertial odometry (VIO) system for determining the position, movement, and/or orientation of device 10 relative to the surrounding environment and can therefore sometimes be referred to as orientation tracking cameras or orientation sensors.

As shown in FIG. 4, the right-hand side of device 10 may include an object/orientation tracking camera 56, whereas the left-hand side of device 10 may include another object/orientation tracking camera 56. Both tracking cameras 56 on the left and right sides of device 10 are sideways-facing cameras pointing towards the right-hand and left-hand sides of device 10, respectively. Sideways-facing cameras 56 may have a relatively wide field of view. For instance, each of cameras 56 may have a field of view defined by an angle A4 in the XY plane that is greater than the field of view angle A1 associated with pass-through camera 50.

Still referring to FIG. 4, the right-hand side of device 10 may contain a first supplemental emitter 60, whereas the left-hand side of device 10 may contain a second supplemental emitter 60. Both emitters 60 on the left and right sides of device 10 are front-facing emitters having the same or similar orientations. The output coverage of emitters 60 may be configured to overlap in front of and below device 10, so that there are no gaps in coverage in front of the user (e.g., the overlapping output coverage ensures that 90%+ of hand motions or hand positions can be properly illuminated by the left and right emitters 60 collectively). If desired, emitters 60 on the left and right sides of device 10 may be replaced by a single emitter or any number of outward-facing emitters.

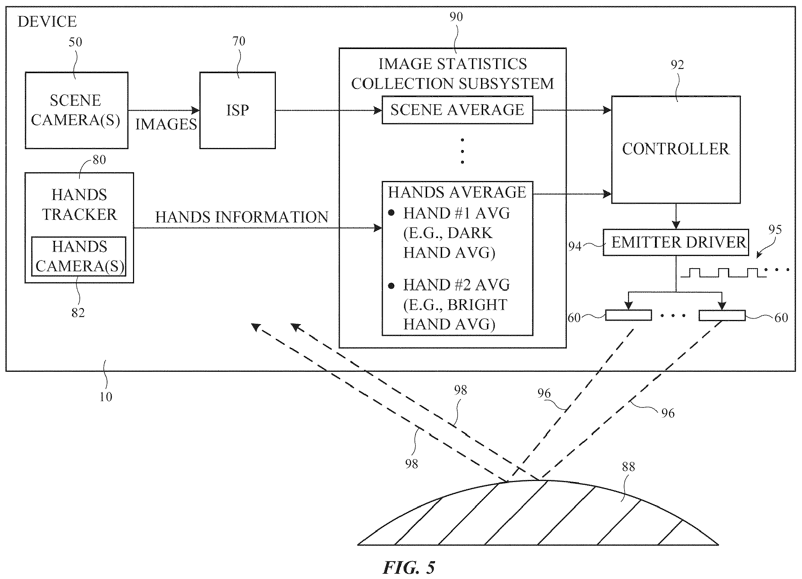

FIG. 5 is a block diagram of illustrative electronic device 10 having different types of sensors and associated supplemental emitters. As shown in FIG. 5, device may include one or more scene cameras 50 that are used to capture images of the external real-world environment surrounding device 10. A video feed output from scene cameras 50 can sometimes be referred to as the raw video feed or a live passthrough video stream. The passthrough feed output from cameras 50 can be processed by image signal processor (ISP) 70 configured to perform image signal processing functions that only rely on the input of the live camera feed itself. For example, ISP block 70 may be configured to perform automatic exposure for controlling an exposure setting for the passthrough video feed, automatic color correction (sometimes referred to as automatic white balance) for controlling a white balance, tone mapping, gamma correction, shading correction, noise reduction, black level adjustment, demosaicing, image sharpening, high dynamic range (HDR) correction, color space conversion, and/or other image signal processing functions (just to name a few) to output corresponding processed video frames.

Device 10 may also include a hands tracker 80 (sometimes referred to as a hands-tracking subsystem, hands-tracking sensor, gestures-tracking subsystem, gestures-tracking sensor, etc.) configured to gather hand position, hand gestures information, and/or other hand related information. Hands tracker 80 may be one of sensors 16 (see FIG. 2). Hands tracker 80 may include one or more cameras 82 and/or other gestures tracking system components (e.g., outward facing components and/or light sources that emit beams of light so that reflections of the beams from a user's hand may be detected) to monitor the user's hand(s). Cameras 82 within hands tracker 80 can be referred to and defined herein as hands cameras 82 and can include cameras 52, 54, and/or 56 (see, e.g., FIGS. 3 and 4). Hands cameras 82 may be directed towards a user's hands and may track the motion associated with the user's hand(s), may determine whether the user is performing a swiping motion with his/her hand(s), may determine whether the user is performing a non-contact button press or object selection operation with his/her hand(s), may determine whether the user is performing a grabbing or gripping motion with his/her hand(s), may determine whether the user is pointing at a given object that is presented on display 14 using his/her hand(s) or fingers, may determine whether the user is performing a waving or bumping motion with his/her hand(s), or may generally measure/monitor three-dimensional non-contact gestures ("air gestures") associated with the user's hand(s).

The processed images or video frames output from image signal processor 70 can be analyzed using an image statistics collection subsystem such as image statistics collection block 90. Image statistics collection block 90 can analyze the processed images and obtain information relating to automatic exposure (AE) settings, auto focus (AF) settings, auto white balance (AWB) settings, brightness settings, black level compensation settings, a brightness histogram (e.g., a graphical representation of tonal distribution in a digital image), a color histogram (e.g., a graphical representation of color distribution in a digital image), sharpness maps, flicker detection information, object detection, spatial (depth) statistics, thumbnail information, lighting of the environment, image configuration, and/or other statistical information relating to the captured image. The information collected by image statistics collection block 90 may be referred to collectively as image statistics information. In accordance with an embodiment, image statistics collection block 90 can obtain, among other image statistics, a scene average value of an image. A "scene average" can refer to and be defined herein as an average brightness value of a captured scene image (e.g., an overall sensor average of the captured scene, potentially with a spatial map that is center weighted as an example).

The hands information output from hands tracker 80 can also be analyzed using image statistics collection block 90. Image statistics collection block 90 can analyze the hands information and can obtain, among other external object tracking statistics, a hands average value. In typical scenarios, hands tracker 80 should be able to detect information associated with both of the user's hands. It is rare that both left and right hands are identically illuminated. More often than not, one of the user's hand will be brighter or darker than the other hand. Image statistics collection block 90 can identify a first hand average corresponding to an average brightness value associated with the *darker* hand and can also identify a second hand average corresponding to an average brightness value associated with the *brighter* hand. The first hand average is thus sometimes referred to and defined herein as the dark(er) hand average and can refer to either the left hand or the right hand. Similarly, the second hand average is thus sometimes referred to and defined herein as the bright(er) hand average and can refer to either the left or right hand. The combined brightness average of both hands can be referred to as a "*hands* average" (e.g., the hands average is equal to the average of the dark hand average and the bright hand average). These hand averages can first be computed for each camera 82. The hand averages from each camera 82 can then be combined to obtain the dark hand average, the bright hand average, and the hands average.

Image statistics collection block 90 may output, among other statistics, at least the scene average and the hands average (along with the dark hand average and the bright hand average) to a control circuit such as controller 92. Controller 92 may be configured to control an emitter driver circuit such as emitter driver 94 based on the information received from image statistics collection block 90. Controller 92 is therefore sometimes referred to as an emitter controller. Controller 92 can be considered part of control circuitry 12 in FIG. 2. Emitter driver 94 may be configured to output a series of pulses for driving the one or more supplemental emitters 60. Controller 92 can adjust the output strength of the emitters 60 by tuning the output pulses 95. For example, controller 92 can direct emitter driver 94 to increase the illumination provided by emitters 60 by increasing the pulse width of signals 95, by increasing the output driving current of driver 94, by increase the frequency of signals 95, and/or by other ways of increasing the output strength of emitters 60. Signals 95 are therefore sometimes referred to as pulse-width-modulated signals or strobe signals. Conversely, controller 92 can direct emitter driver 94 to decrease the illumination provided by emitters 60 by reducing the pulse width of signals 95, by reducing the output drive current of driver 94, by reducing the frequency of signals 95, and/or by other ways of decreasing the output strength of emitters 60.

Upon receiving the pulse signals 95 from emitter driver 94, emitters 60 can output light 96 (e.g., infrared light) for illuminating one or more external object(s) such as external object 88. Object 88 can represent a user's hand(s), a user's torso, other user body part(s), and/or other external object related or unrelated to the user. The light 96 emitted from supplemental emitters 60 can bounce off of external object 88 as reflected light 98, which can then be received and sensed by hands cameras 82 and/or other external object tracking sensors within device 10.

Care should be taken when controlling the supplemental emitters 60 to simultaneously optimize for sufficient hands detection capability without consuming too much power. For example, the supplemental emitters 60 can be turned off (e.g., by deactivating emitter driver 94) in bright(er) light conditions when the external object(s) being tracked are sufficiently illuminated. In darker, dim, or low light conditions in which the external objects being tracked are not being sufficiently illuminated by the existing ambient light within the environment, emitters 60 can be turned on (e.g., by activating emitter driver 94 to provide supplemental illumination for the external objects being tracked).

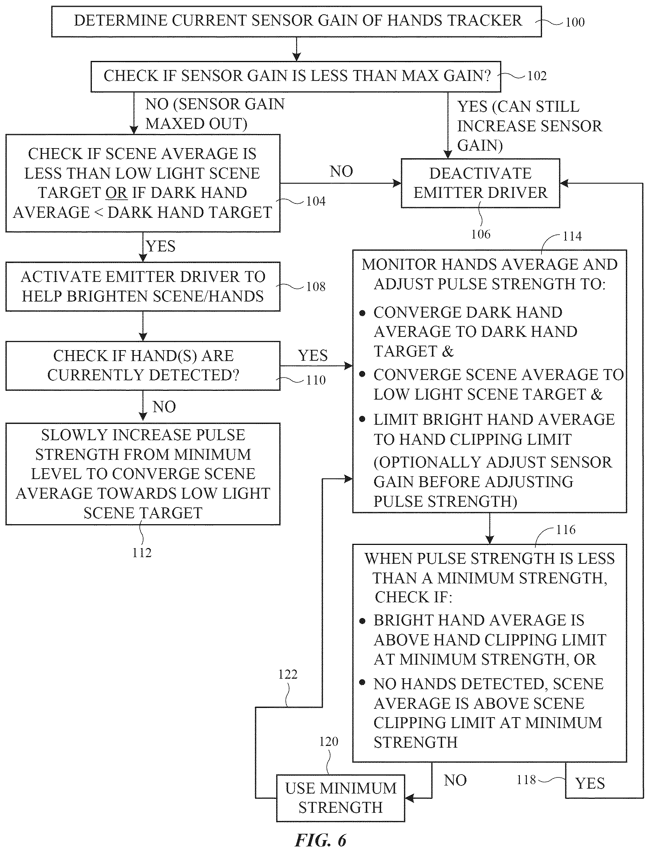

FIG. 6 is a flow chart of illustrative steps for operating an electronic device 10 of the type shown in FIGS. 1-5. During the operations of block 100, control circuitry (e.g., controller 92 of FIG. 5 or control circuitry 12 of FIG. 2) can be used to determine a current sensor gain of hands tracker 80 (e.g., to determine the current sensor gain of hands cameras 82). During the operations of block 102, the control circuitry can determine whether the current sensor gain of the hands cameras 82 is less than a maximum sensor gain level. The current sensor gain of the various hands cameras 82 may be the same or can be different. Device configurations in which the sensor gain of all of the hands cameras 82 is the same are sometimes described as an example herein.

If the current sensor gain of the hands cameras is indeed less than the maximum sensor gain level, processing may proceed to block 106 to deactivate the emitter driver 94 (e.g., to turn off the supplemental emitters 60) since the hands cameras can still increase the sensor gain to boost the brightness level of the hands capture if needed. If, however, the current sensor gain of the hands cameras is equal to the maximum sensor gain level (i.e., the sensor gain of the hands cameras is maxed out), processing may proceed to block 104.

During the operations of block 104, logic in the control circuitry can check if the captured scene is too dark or if the darker hand is too dark. The control circuitry may receive scene average and dark hand average values from image statistics collection block 90. The control circuitry may determine whether the captured scene is too dark by comparing the received scene average to a low light scene target. The "low light scene target" may refer to and be defined herein as a scene brightness threshold level, where scene averages below this threshold/target are considered too dark for proper external object sensing and where scene averages above this threshold/target are considered sufficiently bright for proper external objecting sensing. The threshold level can be based on minimum requirements of one or more downstream algorithms. The threshold can be set in advance or can be adjusted during operation of device 10.

Logic in the control circuitry may determine whether the darker hand is too dark by comparing the dark hand average to a dark hand target. The "dark hand target" may refer to and be defined herein as a predetermined dark hand brightness threshold level, where dark hand averages below this threshold/target are considered too dark for proper hands detection and where dark hand averages above this threshold/target are considered sufficiently bright for proper hands detection. The dark hand target is sometimes referred to as an external object target or threshold value. In an illustrative scenario where the brightness range is represented using a 10-bit digital code ranging from 0 to 1023, the low light scene target and the dark hand target may both be set to 80 (as an example). This is merely illustrative. As another example, the low light scene target may be less than the dark hand target. As another example, the low light scene target may be greater than the dark hand target. If desired, the brightness range can be encoded using any suitable number of bits.

In response to determining that the scene average is less than the low light scene target or in response to determining that the dark hard average is less than the dark hand target, processing may proceed to block 108. During the operations of block 108, the emitter driver can be activated to turn on the supplemental emitters 60. Once turned on, the supplemental emitters 60 can provide additional illumination to help brighten the scene and/or hands being captured using the various sensors in device 10.

During the operations of block 110, logic in the control circuitry can check if one or more hands is currently detected. For example, the control circuitry can communicate with hands tracker 80, can communicate with image statistics collection block 90, can analyze statistics information gathered by block 90, or can analyze the hands information output from hands tracker 80 to determine whether any hands are currently detected by the hands tracker. If the control circuitry determines that the hands tracker is not currently detecting any hands, the control circuitry may direct the emitter driver to slowly increase the pulse strength from a minimum level until the scene average converges toward the low light scene target (see operations of block 112). The pulse strength of the emitter driver can be increased by lengthening the pulse width, by boosting the drive current, by boosting the drive voltage, etc. Increasing the pulse strength in this way elevates the overall brightness or intensity level of the light emitted from supplemental emitters 60.

If the control circuitry determines that the hands tracker has detected at least one hand, processing may then proceed to block 114. During the operations of block 114, logic in the control circuitry may monitor the hands average (e.g., the combined hand average value based on the dark hand average and the bright hand average) and adjust (e.g., reduce) the emitter output strength to converge the dark hand average to the dark hand target, to converge the scene average to the low light scene target, *and* to limit the bright hand average to a hand clipping limit. The control circuitry may also receive the bright hand average from image statistics collection block 90. The "hand clipping limit" may refer to and be defined herein as a predetermined bright hand brightness threshold level, where bright hand averages above this threshold/target are considered too bright or over-exposed with clipping brightness values and where bright hand averages below this threshold/target are considered not too bright for proper hands detection. In an illustrative scenario where the brightness range is represented using a 10-bit digital code ranging from 0 to 1023, the hand clipping limit may be set to 250 (as an example). This hand clipping limit is sometimes referred to as the bright hand clipping limit or an external object clipping limit.

The example above in which the emitter output (pulse) strength is reduced to help converge the dark hand average to the dark hand target is illustrative. Reducing the emitter output strength can reduce the brightness of the background, which may degrade the overall signal-to-noise ratio (SNR) of the captured scene in certain scenarios. To help preserve or improve the SNR of the background, the sensor gain (e.g., an analog gain of the hands tracking sensors) can optionally be reduced first before adjusting the emitter output strength to limit the bright hand average to the hand clipping limit. Reducing the analog sensor gain while maintaining the emitter output strength can help improve the overall SNR of the captured scene. This example in which the sensor gain is optionally reduced before lowering the emitter pulse strength is illustrative. If desired, the sensor gain can optionally be adjusted after first adjusting the emitter output strength.

When the control circuitry adjusts the emitter output strength such that the pulse strength is at or less than a minimum pulse strength, processing can proceed to block 116. During the operations of block 116, logic in the control circuitry can check if the bright hand average is above the hand clipping limit when the emitter driver pulse strength is at the minimum pulse strength *or* can check if no hands are detected, whether the scene average is above a scene clipping limit when the emitter drive pulse strength is at the minimum pulse strength. The "scene clipping limit" may refer to and be defined herein as a predetermined bright scene threshold level, where scene averages above this threshold/target are considered too bright or over-exposed with clipping brightness values and where scene averages below this threshold/target are considered not too bright or not overexposed. In an illustrative scenario where the brightness range is represented using a 10-bit digital code ranging from 0 to 1023, the scene clipping limit may be set to 300 (as an example). In general, the scene clipping limit can be set greater than the hand clipping limit, equal to the hand clipping limit, or less than the hand clipping limit.

In response to determining that the bright hand average is above the hand clipping limit when the emitter driver pulse strength is at the minimum pulse strength, processing can proceed to block 106 via path 118 to deactivate the emitter driver (e.g., to turn off the supplemental emitters 60) since the brighter hand is already overly exposed. In response to determining that when no hands are detected and that the scene average is above the scene clipping limit when the emitter drive pulse strength is at the minimum pulse strength, processing can also proceed from block 116 to block 106 also via path 118 to deactivate the emitter driver since the scene is already overly exposed.

Else if neither of the two conditions in block 116 has been met (e.g., if the bright hand average is less than the hand clipping limit when the emitter driver pulse strength is at the minimum *and* if the scene average is less than the scene clipping limit when the emitter driver pulse strength is at the minimum while no hands are detect), the control circuitry can adjust the emitter output strength to the minimum level at block 120 and processing can loop back to block 114, as indicated by path 122.

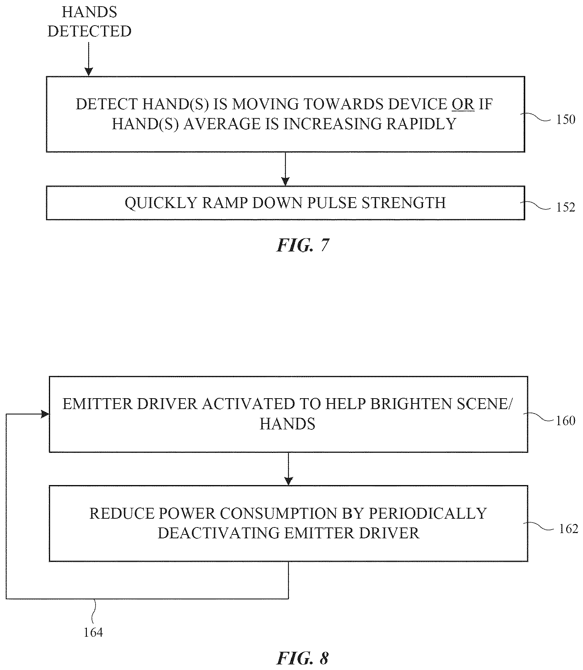

FIG. 7 shows illustrative steps that can optionally be performed in parallel with or separately from the operations of FIG. 6. During the operations of block 150, logic in the control circuitry can determine whether any hand(s) is moving towards device 10 *or* if the hands average is increasing rapidly (e.g., in response to determining that the hands average is increasing at a rate greater than a threshold level). If either scenario is detected, it is likely that the exposure of the detected hand(s) will be overexposed in the near future, so processing can proceed to block 152 to quickly ramp down the pulse strength of the emitter driver signals. Ramping down the emitter driver signal pulse strength in this way can preemptively prevent the hands from being overexposed by the illumination provided from the supplemental emitters 60.

FIG. 8 shows illustrative steps that can optionally be performed in parallel with or separately from the operations of FIGS. 6 and 7. During the operations of block 160, the emitter driver can be activated to help illuminate or brighten the scene and/or hands. This can occur, for example, when at least one of the conditions of block 104 in FIG. 6 have been met (e.g., when the scene average is less than the low light scene target or when the dark hand average is less than the dark hand target).

Subsequently, during the operations of block 162, the emitter driver can periodically be deactivated to reduce power consumption. For instance, after deactivating the supplemental emitters, if the scene average can be maintained above the low light scene target or if the dark hand average can be maintained above the dark hand target, then the control circuitry may determine that the supplemental emitters 60 are no longer needed and can remain in the off state to help save power. Operations can then loop back to block 160, as shown by path 164.

The methods and operations described above in connection with FIGS. 1-8 may be performed by the components of device 10 such as control circuitry 12 using software, firmware, logic, and/or hardware (e.g., dedicated circuitry or hardware). Software code for performing these operations may be stored on non-transitory computer readable storage media (e.g., tangible computer readable storage media) stored on one or more of the components of device 10 (e.g., the storage circuitry within control circuitry 12 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., one or more processors in control circuitry 12). The processing circuitry may include microprocessors, application processors, digital signal processors, central processing units (CPUs), application-specific integrated circuits with processing circuitry, or other processing circuitry.

The present disclosure recognizes that the use of such personal information, in the present technology, can be used to the benefit of users. For example, the personal information data can be used to deliver targeted content that is of greater interest to the user. Accordingly, use of such personal information data enables users to have control of the delivered content. Further, other uses for personal information data that benefit the user are also contemplated by the present disclosure. For instance, health and fitness data may be used to provide insights into a user's general wellness, a user's anatomy (e.g., whether the user has any tattoos on his/her hands), or may be used as positive feedback to individuals using technology to pursue wellness goals.

A physical environment refers to a physical world that people can sense and/or interact with without the aid of an electronic device. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

Many different types of electronic systems can enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers.

In accordance with an embodiment, a method of operating an electronic device is provided that includes capturing an image of a scene using one or more image sensors, detecting an external object using one or more external object sensors, determining whether the external object is sufficiently illuminated based on information obtained from the one or more external object sensors, and in response to determining that the external object is not sufficiently illuminated, activating one or more supplemental emitters to illuminate the external object.

In accordance with another embodiment, the method is provided that includes in response to determining that the external object is sufficiently illuminated, deactivating the one or more supplemental emitters.

In accordance with another embodiment, the method includes determining whether the captured image of the scene is sufficiently bright, and in response to determining that the captured image of the scene is not sufficiently bright, activating the one or more supplemental emitters to illuminate the scene and the external object.

In accordance with another embodiment, the method includes in response to determining that the captured image of the scene is sufficiently bright, deactivating the one or more supplemental emitters.

In accordance with another embodiment, the method includes computing a scene average for the captured image of the scene, determining whether the captured image of the scene is sufficiently bright includes comparing the computed scene average to a low light scene target.

In accordance with another embodiment, the method includes computing a first average associated with a first external object, and computing a second average associated with a second external object different than the first external object, the first average is less than the second average.

In accordance with another embodiment, determining whether the external object is sufficiently illuminated includes comparing the computed first average to an external object target.

In accordance with another embodiment, the method includes determining whether an external object is currently detected by the one or more external object sensors, and in response to determining that no external object is currently detected by the one or more external object sensors, ramping up an output strength of the one or more supplemental emitters to converge the scene average towards the low light scene target.

In accordance with another embodiment, the method includes in response to determining that one or more external objects are currently detected by the one or more external object sensors, computing an external object average based on the first average and the second average.

In accordance with another embodiment, the method includes adjusting the output strength of the one or more supplemental emitters to converge the first average to the external object target.

In accordance with another embodiment, the method includes adjusting the output strength of the one or more supplemental emitters to converge the scene average to the low light scene target.

In accordance with another embodiment, the method includes adjusting the output strength of the one or more supplemental emitters to limit the second average to an external object clipping limit.

In accordance with another embodiment, the method includes determining whether the second average is above the external object clipping limit when the output strength of the one or more supplemental emitters is at a minimum level, and in response to determining that the second average is above the external object clipping limit when the output strength of the one or more supplemental emitters is at the minimum level, deactivating the one or more supplemental emitters.

In accordance with another embodiment, the method includes limiting the second average to the external object clipping limit by adjusting a gain of the one or more external object sensors before adjusting the output strength of the one or more supplemental emitters.

In accordance with another embodiment, the method includes determining whether the scene average is above a scene clipping limit when the output strength of the one or more supplemental emitters is at a minimum level, and in response to determining that the scene average is above the scene clipping limit when the output strength of the one or more supplemental emitters is at the minimum level, deactivating the one or more supplemental emitters.

In accordance with another embodiment, the method includes using the one or more supplemental emitters to emit infrared light to illuminate the external object.

In accordance with an embodiment, a method of operating a head-mounted device having one or more image sensors and a hands tracker, the method is provided that includes capturing an image of a scene using the one or more image sensors, detecting a hand using the hands tracker, activating one or more supplemental emitters to illuminate the hand, detecting a motion of the hand, and adjusting an output strength of the one or more supplemental emitters based on the detected motion of the hand.

In accordance with another embodiment, adjusting the output strength of the one or more supplemental emitters based on the detected motion of the hand includes decreasing the output strength of the one or more supplemental emitters in response to detecting that the hand is moving towards the hands tracker.

In accordance with another embodiment, the method includes computing an average brightness value for the detected hand, and decreasing the output strength of the one or more supplemental emitters in response to determining that the computed average brightness value is increasing at a rate greater than a threshold level.

In accordance with another embodiment, the method includes periodically deactivating the one or more supplemental emitters, and while the one or more supplemental emitters are deactivated, determining whether a scene average of the captured image is less than a low light scene target and determining whether a hand average of the detected hand is less than a dark hand target.

In accordance with an embodiment, a head-mounted device is provided that includes support structures configured to mount the head-mounted device on a user's head, one or more scene cameras configured to capture images of a scene, one or more hands cameras configured to detect a user's hands, one or more supplemental emitters configured to provide supplemental illumination for the user's hands, and control circuitry configured to determine whether the user's hands are sufficiently illuminated, determine whether the captured images are properly exposed, and adjust the one or more supplemental emitters based on whether the user's hands are sufficiently illuminated and based on whether the captured images are properly exposed.

In accordance with another embodiment, the control circuitry is configured to determine whether the user's hands are sufficiently illuminated by obtaining a dark hand average associated with a darker one of the user's hands, obtaining a bright hand average associated with a brighter one of the user's hands, and comparing the dark hand average to a predetermined dark hand target.

In accordance with another embodiment, the control circuitry is configured to determine whether the captured images are properly exposed by obtaining a scene average of the captured images, and comparing the scene average to a predetermined low light scene target.

The foregoing is merely illustrative and various modifications can be made to the described embodiments. The foregoing embodiments may be implemented individually or in any combination.

Exemplary methods and head-mounted devices are set out in the following items.
1. A method of operating an electronic device, comprising:
   capturing an image of a scene using one or more image sensors;
   detecting an external object using one or more external object sensors;
   determining whether the external object is sufficiently illuminated based on information obtained from the one or more external object sensors; and
   in response to determining that the external object is not sufficiently illuminated, activating one or more supplemental emitters to illuminate the external object.
2. The method of item 1, further comprising:
   in response to determining that the external object is sufficiently illuminated, deactivating the one or more supplemental emitters.
3. The method of item 1, further comprising:
   determining whether the captured image of the scene is sufficiently bright; and
   in response to determining that the captured image of the scene is not sufficiently bright, activating the one or more supplemental emitters to illuminate the scene and the external object.
4. The method of item 3, further comprising:
   in response to determining that the captured image of the scene is sufficiently bright, deactivating the one or more supplemental emitters.
5. The method of item 3, further comprising:
   computing a scene average for the captured image of the scene, wherein determining whether the captured image of the scene is sufficiently bright comprises comparing the computed scene average to a low light scene target.
6. The method of item 5, further comprising:
   computing a first average associated with a first external object; and
   computing a second average associated with a second external object different than the first external object, wherein the first average is less than the second average.
7. The method of item 6, wherein determining whether the external object is sufficiently illuminated comprises comparing the computed first average to an external object target.
8. The method of item 7, further comprising:
   determining whether an external object is currently detected by the one or more external object sensors; and
   in response to determining that no external object is currently detected by the one or more external object sensors, ramping up an output strength of the one or more supplemental emitters to converge the scene average towards the low light scene target.
9. The method of item 8, further comprising:
   in response to determining that one or more external objects are currently detected by the one or more external object sensors, computing an external object average based on the first average and the second average.
10. The method of item 9, further comprising:
   adjusting the output strength of the one or more supplemental emitters to converge the first average to the external object target.
11. The method of item 9, further comprising:
   adjusting the output strength of the one or more supplemental emitters to converge the scene average to the low light scene target.
12. The method of item 9, further comprising:
   adjusting the output strength of the one or more supplemental emitters to limit the second average to an external object clipping limit.
13. The method of item 12, further comprising:
   determining whether the second average is above the external object clipping limit when the output strength of the one or more supplemental emitters is at a minimum level; and
   in response to determining that the second average is above the external object clipping limit when the output strength of the one or more supplemental emitters is at the minimum level, deactivating the one or more supplemental emitters.
14. The method of item 12, further comprising:
   limiting the second average to the external object clipping limit by adjusting a gain of the one or more external object sensors before adjusting the output strength of the one or more supplemental emitters.
15. The method of item 9, further comprising:
   determining whether the scene average is above a scene clipping limit when the output strength of the one or more supplemental emitters is at a minimum level; and
   in response to determining that the scene average is above the scene clipping limit when the output strength of the one or more supplemental emitters is at the minimum level, deactivating the one or more supplemental emitters.
16. The method of item 1, further comprising:
   using the one or more supplemental emitters to emit infrared light to illuminate the external object.
17. A method of operating a head-mounted device having one or more image sensors and a hands tracker, the method comprising:
   capturing an image of a scene using the one or more image sensors;
   detecting a hand using the hands tracker;
   activating one or more supplemental emitters to illuminate the hand;
   detecting a motion of the hand; and
   adjusting an output strength of the one or more supplemental emitters based on the detected motion of the hand.
18. The method of item 17, wherein adjusting the output strength of the one or more supplemental emitters based on the detected motion of the hand comprises decreasing the output strength of the one or more supplemental emitters in response to detecting that the hand is moving towards the hands tracker.
19. The method of item 17, further comprising:
   computing an average brightness value for the detected hand; and
   decreasing the output strength of the one or more supplemental emitters in response to determining that the computed average brightness value is increasing at a rate greater than a threshold level.
20. The method of item 17, further comprising:
   periodically deactivating the one or more supplemental emitters; and
   while the one or more supplemental emitters are deactivated, determining whether a scene average of the captured image is less than a low light scene target and determining whether a hand average of the detected hand is less than a dark hand target.
21. A head-mounted device comprising:
   support structures configured to mount the head-mounted device on a user's head;
   one or more scene cameras configured to capture images of a scene;
   one or more hands cameras configured to detect a user's hands;
   one or more supplemental emitters configured to provide supplemental illumination for the user's hands; and
   control circuitry configured to:
      determine whether the user's hands are sufficiently illuminated,
      determine whether the captured images are properly exposed, and
      adjust the one or more supplemental emitters based on whether the user's hands are sufficiently illuminated and based on whether the captured images are properly exposed.
22. The head-mounted device of item 21, wherein the control circuitry is configured to determine whether the user's hands are sufficiently illuminated by:
   obtaining a dark hand average associated with a darker one of the user's hands;
   obtaining a bright hand average associated with a brighter one of the user's hands; and
   comparing the dark hand average to a predetermined dark hand target.
23. The head-mounted device of item 21, wherein the control circuitry is configured to determine whether the captured images are properly exposed by:
   obtaining a scene average of the captured images; and
   comparing the scene average to a predetermined low light scene target.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method of operating an electronic device, comprising:
capturing an image of a scene using one or more image sensors;
detecting an external object using one or more external object sensors;
determining whether the external object is sufficiently illuminated based on information obtained from the one or more external object sensors; and
in response to determining that the external object is not sufficiently illuminated, activating one or more supplemental emitters to illuminate the external object.

2. The method of claim 1, further comprising:
in response to determining that the external object is sufficiently illuminated, deactivating the one or more supplemental emitters.

3. The method of claim 1, further comprising:
determining whether the captured image of the scene is sufficiently bright; and
in response to determining that the captured image of the scene is not sufficiently bright, activating the one or more supplemental emitters to illuminate the scene and the external object.

4. The method of claim 3, further comprising:
in response to determining that the captured image of the scene is sufficiently bright, deactivating the one or more supplemental emitters.

5. The method of claim 3, further comprising:
computing a scene average for the captured image of the scene, wherein determining whether the captured image of the scene is sufficiently bright comprises comparing the computed scene average to a low light scene target.

6. The method of claim 5, further comprising:
computing a first average associated with a first external object; and
computing a second average associated with a second external object different than the first external object, wherein the first average is less than the second average.

7. The method of claim 6, wherein determining whether the external object is sufficiently illuminated comprises comparing the computed first average to an external object target.

8. The method of claim 7, further comprising:
determining whether an external object is currently detected by the one or more external object sensors; and
in response to determining that no external object is currently detected by the one or more external object sensors, ramping up an output strength of the one or more supplemental emitters to converge the scene average towards the low light scene target.

9. The method of claim 8, further comprising:
in response to determining that one or more external objects are currently detected by the one or more external object sensors, computing an external object average based on the first average and the second average.

10. The method of claim 9, further comprising:
adjusting the output strength of the one or more supplemental emitters to converge the first average to the external object target.

11. The method of claim 9, further comprising:
adjusting the output strength of the one or more supplemental emitters to converge the scene average to the low light scene target.

12. The method of claim 9, further comprising:
adjusting the output strength of the one or more supplemental emitters to limit the second average to an external object clipping limit.

13. The method of claim 12, further comprising:
determining whether the second average is above the external object clipping limit when the output strength of the one or more supplemental emitters is at a minimum level; and
in response to determining that the second average is above the external object clipping limit when the output strength of the one or more supplemental emitters is at the minimum level, deactivating the one or more supplemental emitters.

14. The method of claim 12, further comprising:
limiting the second average to the external object clipping limit by adjusting a gain of the one or more external object sensors before adjusting the output strength of the one or more supplemental emitters.

15. The method of claim 9, further comprising:
determining whether the scene average is above a scene clipping limit when the output strength of the one or more supplemental emitters is at a minimum level; and
in response to determining that the scene average is above the scene clipping limit when the output strength of the one or more supplemental emitters is at the minimum level, deactivating the one or more supplemental emitters.
